# EUROPÄISCHE PATENTSCHRIFT

(11) **EP 0 707 808 B1**
(45) Veröffentlichungstag und Bekanntmachung des Hinweises auf die Patenterteilung: **18.09.2002**
(21) Anmeldenummer: 95116553.9
(22) Anmeldetag: 20.10.1995
(51) Int. Cl.: A47B 17/00

(54) **Adapter**
Adapter
Adaptateur

(30) Priorität: 20.10.1994 DE 9418403 U
(43) Veröffentlichungstag der Anmeldung: 24.04.1996
(73) Patentinhaber: SCHÜCO International KG, 33609 Bielefeld (DE)
(72) Erfinder: Diekmann, Bernd, Dipl.-Ing., D-33790 Halle/Westf. (DE); Stosch, Martin, Dipl.-Ing. Arch., D-32756 Detmond (DE)
(74) Vertreter: Stracke, Alexander, Dipl.-Ing.

(56) Entgegenhaltungen:
- US-A- 4 017 199
- US-A- 4 163 537
- US-A- 4 410 157

## Beschreibung

Die Erfindung betrifft einen Adapter zur Festlegung an einer wenigstens eine hinterschnittene Längsnut aufweisende Profilschiene eines Möbelbauelementes, insbesondere eines Arbeitstischgestelles, der mit Befestigungselementen und mindestens einer Aufnahme für ein weiteres Bauteil versehen ist.

Ein Adapter gemäß dem Oberbegriff des unabhängigen Anspruchs ist aus US-A-4 163 537 bereits bekannt.

Der in Frage kommende Adapter wird beispielsweise benötigt, um zwei Möbelbauteile miteinander zu verbinden, wobei ein Möbelbauteil eine Profilschiene ist, die in jede Richtung verlaufen kann. Je nach Art des Bauteils kann dieses auch direkt an der Profilschiene festgelegt werden, beispielsweise eine Tischplatte. Aus den Profilschienen wird dazu ein unterhalb der Tischplatte liegender horizontaler Rahmen gebildet. Mittels des Adapters können dann je nach Verwendungszweck weitere Möbelbauteile oder sonstige Geräte, beispielsweise im Büro benötigte Geräte daran festgelegt werden. Je nach Art des Bauteils bzw. des Gerätes ist ein entsprechender Adapter notwendig.

Bei den bisher bekannten Ausführungen der Adapter sind die notwendigen Befestigungselemente so ausgelegt, daß sie gegenüber der Außenkontur vorstehen. Dadurch hindern sie bei der Montage.

Der vorliegenden Erfindung liegt die Aufgabe zugrunde, bei einen Adapter der eingangs näher beschriebenen Art so auszubilden, daß die zur Festlegung an eine Profilschiene notwendigen Befestigungselemente so angeordnet werden können, daß sie beim lagegerechten, teilweise formschlüssigen und selbstlehrenden Einsetzen den Montagevorgang zu dessen Vereinfachung nicht behindern.

Die gestellte Aufgabe wird gelöst, indem der Adapter wenigstens eine die Profilschiene kontaktierende Anlagefläche und einen an einer winklig zur Anlagefläche stehenden Fläche der Profilschiene anliegenden sowie eine rechtwinklig zur Anlagefläche stehende Gewindebohrung aufweist, in die eine Klemmschraube eingedreht ist, auf dessen freies Ende ein Nutenstein drehbar aufgesetzt ist, der im ungeklempten Zustand in einer zur Anlagefläche offene Ausnehmung liegt und in die angrenzende Nut einführbar ist.

Die Profilschienen sind allgemein bekannt. Die Grundkontur kann nicht nur rechteckig, sondern auch eine andere, mehreckige Form, beispielsweise trapezförmig sein. An jeder Außenfläche können auch mehr als eine Längsnut vorgesehen sein. Durch den erfindungsgemäßen Adapter kann dieser komplett vormontiert werden, ohne daß die Befestigungselemente beim Ansetzen des Adapters an die jeweilige Profilschiene hinderlich oder störend ist. Die zum Festklemmen des Adapters notwendige Klemmschraube mit dem darauf aufgedrehten Nutenstein kann soweit zurückgezogen werden, bedingt durch die zur Anlagefläche offene Ausnehmung. Der Ausleger dient dabei zur Lastabtragung für den Rahmen oder das Gestell oder auch für den Adapter selbst. Zum Festlegen des Adapters wird die Schraube so weit in die Gewindebohrung hineingedreht, daß der Nutenstein in die Hinterschneidung gelangt. Der Nutenstein ist so ausgelegt, daß er in einer bestimmten Stellung durch die nach außen offene Nut hindurchgeführt werden kann und nach einem Verdrehen die die Nut begrenzenden Randstege hintergreift. Der Adapter ist durch die Anlagefläche und den Ausleger gegenüber der Profilschiene genau fixierbar.

In weiterer Ausgestaltung ist vorgesehen, daß der freie Endbereich des Auslegers als eine in eine offene Längsnut der Profilschiene eingreifende, parallel zur Anlagefläche stehende Verhakung ausgebildet ist. Durch diese Verhakung wird der Adapter in zwei Richtungen formschlüssig selbstlehrend festgelegt. Dadurch ist der Adapter ausschließlich in Längsrichtung der Profilschiene justierbar. Bei einem Tisch, beispielsweise einem Schreibtisch würde dann die Verhakung in eine unterseitige Nut oder in einen unterseitigen Profilversprung eingreifen, wenn auf den Profilschienen ein Rahmen gebildet ist, der die Tischplatte trägt. Anstelle der Verhakung kann der Ausleger einen schräg zur Anlagefläche stehenden, der winklig zur Anlagefläche stehenden Fläche zugeordneten einstellbaren Anschlag aufweisen. In einfachster Weise ist dieser einstellbare Anschlag eine Einstellschraube.

Der Nutenstein hat zweckmäßigerweise die Grundkontur eines Parallelogramms. Dadurch ist es möglich, daß er durch die zur Anlagefläche hin offene Nut aufrechtstehend geführt wird und dann verdreht wird. Dabei ist es dann zweckmäßig, wenn die seitlichen Flächen unter einem Winkel von 45 Grad zu den Querkanten stehen. In der Klemmstellung liegen dann diese seitlichen Flächen an den die Hinterschneidung begrenzenden Stegen flächig an. Er liegt dann sinngemäß diagonal in der Nut. Nach dem Verschwenken in diese Wirkstellung wird die Klemmschraube angezogen, so daß der Adapter kraftschlüssig an der jeweiligen Profilschiene festgelegt ist.

Der Adapter kann so gestaltet sein, daß je nach Art des Möbels und Verwendungszweck entsprechende Bauteile oder Geräte an der Profilschiene festgelegt werden können. Besonders ist jedoch an Schreibtische gedacht. Für diesen Fall ist vorgesehen, daß der Adapter eine konisch ausgebildete Bohrung aufweist. In diese Bohrung kann dann ein Tischbein eingesteckt werden. Durch die Konizität keilt sich dieses selbstätig fest, so daß keine Befestigungselemente notwendig werden.

Anhand der beiliegenden Zeichnungen wird die Erfindung noch näher erläutert.

Es zeigen:
- Figur 1: den an eine Profilschiene angesetzten Adapter im noch nicht festgeklemmten Zustand,
- Figur 2: den Ausleger des Adapters in einer zweiten Ausführungsform,
- Figur 3: den Adapter als Einzelheit in einer Draufsicht und
- Figur 4: den Nutenstein zur Festlegung des Adapters als Einzelheit.

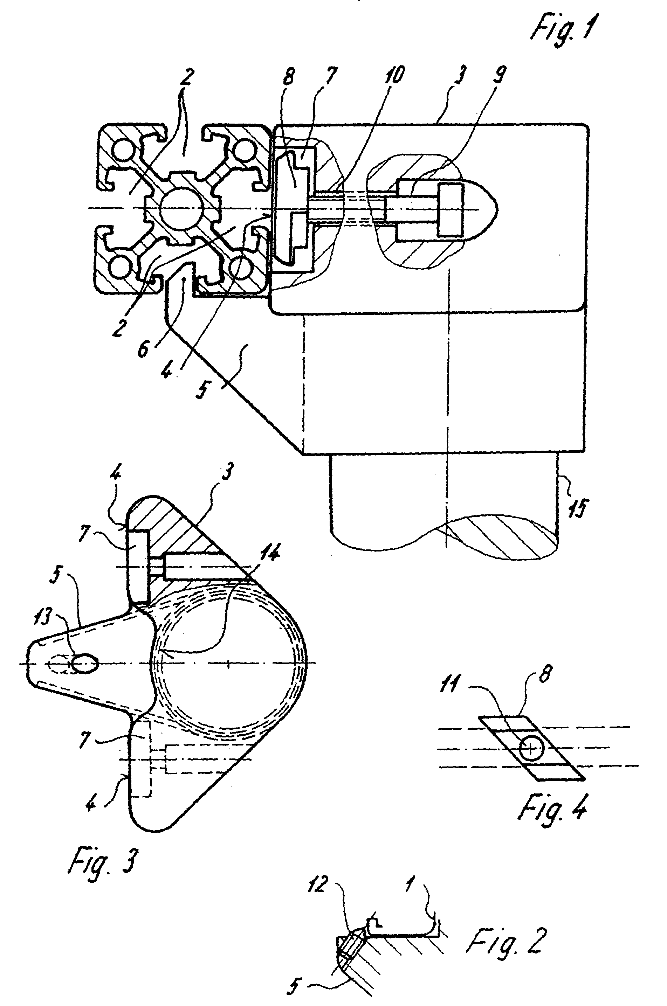

Bei der Ausführung nach der Figur 1 ist eine quadratische Grundform aufweisende Profilschiene 1 im Schnitt dargestellt. An jeder Seite ist sie mit einer hinterschnittenen Längsnut 2 versehen, die auch als Systemnut bezeichnet werden kann. Die Profilschiene könnte Teil eines Rahmens zur Aufnahme einer Tischplatte sein. An die Profilschiene 1 ist ein Adapter 3 angelegt. Dieser Adapter 3 ist in zwei Richtungen bereits fixiert, bzw. er ist formschlüssig und selbstlehrend angelegt, da er eine Anlagefläche 4 und einen Ausleger 5 aufweist, dessen freier Endbereich als Verhakung 6 ausgebildet ist. Wie die Figur 3 zeigt, besteht die Anlagefläche im dargestellten Ausführungsbeispiel aus zwei Einzelflächen, die beidseitig des Auslegers 5 liegen. Es ergibt sich, daß in der in der Figur 1 dargestellten Stellung der Adapter 3 lediglich noch in Längsrichtung der Profilschiene 1 verschiebbar ist. Von der Anlagefläche 4, bzw. den Anlageflächen 4 aus erstreckt sich in den Adapter jeweils eine Ausnehmung 7, in der in der noch nicht festgelegten Stellung ein Nutenstein 8 liegt, der auf das freie Ende einer als Zylinderkopfschraube ausgebildeten Klemmschraube 9 aufgedreht ist. Der Gewindeschaft der Klemmschraube 9 ist in eine Gewindebohrung 10 eingedreht. Die Gewindebohrung 10 endet in einer Öffnung, so daß der Schraubenkopf der Klemmschraube 9 frei beweglich ist. Der Nutenstein 8 hat dazu ebenfalls eine Bohrung 11. Insbesondere die Figur 4 zeigt, daß der Nutenstein eine parallelogrammförmige Grundkontur hat. In der Figur 4 ist die beklemmte Endstellung dargestellt, in der die seitlichen Kanten parallel zu den Randkanten stehen, die die Hinterschneidung der Längsnut 2 bilden. Die Breite des Nutensteines 8 ist nur so groß, daß er durch die beiden Randkanten hindurchgeführt werden kann, wenn der Adapter 3 mittels der Klemmschraube 9 festgelegt werden soll. Dies erfolgt durch eine entsprechende Drehung der Klemmschraube 9. Zum Einführen in die Längsnut 2 muß der Nutenstein 8 die entsprechende Stellung haben. Sobald die Randkanten ihn freigeben, wird er durch die Reibung in die in der Figur 4 dargestellte Endstellung geschwenkt. Durch entsprechende Drehung der Klemmschraube 9 wird er dann in der Längsnut 2 festgesetzt, so daß der Adapter 3 unverschiebbar an der Profilschiene 1 festgelegt ist. Zur größeren Sicherheit ist es vorteilhaft, wenn gemäß der Figur 3 der Adapter 3 mit zwei Ausnehmungen 7 und demzufolge auch mit zwei Klemmschrauben ausgerüstet ist.

Gemäß der Figur 2 ist der Ausleger 5 anstelle der Verhakung 6 mit einem einstellbaren Anschlag in Form einer einfachen Einstellschraube 12 ausgerüstet. Diese Einstellschraube 12 kann so in der Gewindebohrung verdreht werden, daß der Adapter 3 entsprechend der Figur 1 nach dem Ansetzen nur noch in Längsrichtung der Profilschiene 1 verschiebbar ist. Die Gewindebohrung ist durch das Bezugszeichen 13 in der Figur 3 gekennzeichnet.

Der Adapter 3 ist außerdem mit einer konischen Bohrung 14 versehen, deren Längsachse quer zur Längsachse der Einstellschraube 12 verläuft. Im dargestellten Ausführungsbeispiel gemäß der Figur 1 ist in diese konische Bohrung 14 ein senkrecht stehendes Tischbein 15 eingesteckt. Aus der Figur 1 ergibt sich, daß der Adapter 3 im noch nicht festgeklemmten Zustand keine gegenüber der Außenkontur vorstehende Teile hat, so daß die Montage äußerst einfach wird. Es ergibt sich auβerdem, daß der Adapter 3 für die vielfältigsten Verbindungen einsetzbar ist.

## Patentansprüche

1. Adapter zur Festlegung an einer wenigstens eine hinterschnittene Längsnut aufweisende Profilschiene eines Möbelbauelementes, insbesondere eines Arbeitstischgestelles, der mit Befestigungselementen und mindestens einer Aufnahme für ein weiteres Bauteil versehen ist, wobei der Adapter (3) mindestens eine die Profilschiene (1) kontaktierende Anlagefläche (4) und einen an einer winklig zur Anlagefläche stehenden Fläche der Profilschiene anliegenden Ausleger (5), **dadurch gekennzeichnet, daß** der Adapter eine rechtwinklig zur Anlagefläche (4) stehende Gewindebohrung (10) aufweist, in die eine Klemmschraube (9) eingedreht ist, auf dessen freies Ende ein Nutenstein (8) drehbar aufgesetzt ist, der im ungeklemmten Zustand in einer zur Anlagefläche (4) offenen Ausnehmung (7) liegt und in die angrenzende Längsnut (2) einführbar ist.

2. Adapter nach Anspruch 1, **dadurch gekennzeichnet, daß** der freie Endbereich des Auslegers als eine in eine offene Längsnut (2) der Profilschiene (1) eingreifende, parallel zur Anlagefläche (4) stehende Verhakung (6) ausgebildet ist.

3. Adapter nach Anspruch 1, **dadurch gekennzeichnet, daß** der Ausleger (5) einen schräg zur Anlagefläche (4) stehenden, der winklig dazu stehenden Fläche zugeordneten, einstellbaren Anschlag (12) aufweist.

4. Adapter nach Anspruch 3, **dadurch gekennzeichnet, daß** der einstellbare Anschlag als Einstellschraube (12) ausgebildet ist.

5. Adapter nach Anspruch 1, **dadurch gekennzeichnet, daß** der Nutenstein (8) eine parallelogrammförmige Grundkontur aufweist.

6. Adapter nach einem oder mehreren der vorhergehenden Ansprüche 1 bis 5, **dadurch gekennzeichnet, daß** der Adapter (3) eine konisch ausgebildete Bohrung (14) aufweist.

## Claims

1. Adapter for securing on a profile rail which has at least one undercut longitudinal groove and belongs to a furniture component, in particular a desk or workbench framework, which is provided with fastening elements and at least one mount for a further component, the adapter (3) having at least one abutment surface (4), which comes into contact with the profile rail (1), and an extension arm (5), which butts against a profile-rail surface which is located at an angle to the abutment surface, **characterized in that** the adapter has a threaded bore (10) which is located at right angles to the abutment surface (4) and into which is screwed a clamping screw (9), on the free end of which a sliding block (8) is positioned in a rotatable manner, which sliding block, in the non-clamped state, is located in a recess (7), which is open towards the abutment surface (4), and can be introduced into the adjacent longitudinal groove (2).

2. Adapter according to Claim 1, **characterized in that** the free end region of the extension arm is designed as an interlocking means (6) which engages in an open longitudinal groove (2) of the profile rail (1) and is located parallel to the abutment surface (4).

3. Adapter according to Claim 1, **characterized in that** the extension arm (5) has an adjustable stop (12) which is located obliquely in relation to the abutment surface (4) and is assigned to the surface which is located at an angle thereto.

4. Adapter according to Claim 3, **characterized in that** the adjustable stop is designed as an adjusting screw (12).

5. Adapter according to Claim 1, **characterized in that** the sliding block (8) has a parallelogram-shaped basic contour.

6. Adapter according to one or more of the preceding claims, Claims 1 to 5, **characterized in that** the adapter (3) has a conical bore (14).

## Revendications

1. Adaptateur destiné à se fixer sur un rail profilé, présentant au moins une rainure longitudinale en contre-dépouille, d'un élément de meuble, en particulier d'un châssis de bureau, qui est muni d'éléments de fixation et d'au moins un logement pour un autre élément, l'adaptateur (3) présentant au moins une surface d'appui (4) au contact du rail profilé (1) et une console (5) s'appuyant contre une surface du rail profilé formant un angle avec la surface d'appui, **caractérisé en ce que** l'adaptateur présente un perçage fileté (10) perpendiculaire à la surface d'appui (4), dans lequel est vissée une vis de blocage (9) à l'extrémité libre de laquelle un coulisseau (8) est monté rotatif, coulisseau qui, à l'état non serré, se place dans un évidement (7) ouvert en direction de la surface d'appui (4) et peut être introduit dans la rainure longitudinale (2) voisine.

2. Adaptateur selon la revendication 1, **caractérisé en ce que** la zone d'extrémité libre de la console est formée à la manière d'un crochet (6) s'engageant dans une rainure longitudinale ouverte (2) du rail profilé (1) et parallèle à la surface d'appui (4).

3. Adaptateur selon la revendication 1, **caractérisé en ce que** la console (5) présente une butée (12) réglable, inclinée par rapport à la surface d'appui (4) et associée à la surface formant un angle avec celle-ci.

4. Adaptateur selon la revendication 3, **caractérisé en ce que** la butée réglable est conformée en vis de réglage (12).

5. Adaptateur selon la revendication 1, **caractérisé en ce que** le coulisseau (8) présente un contour de base en forme de parallélogramme.

6. Adaptateur selon une ou plusieurs des revendications précédentes 1 à 5, **caractérisé en ce que** l'adaptateur (3) présente un perçage (14) de forme conique.
